# EUROPÄISCHE PATENTSCHRIFT

(11) **EP 0 640 790 B1**
(45) Veröffentlichungstag und Bekanntmachung des Hinweises auf die Patenterteilung: **27.12.1996**
(21) Anmeldenummer: 94112934.8
(22) Anmeldetag: 18.08.1994
(51) Int. Cl.: F16M 13/02

(54) **Haltevorrichtung für einen Desktop-Personalcomputer**
Supporting device for a personal computer
Dispositif de support pour un ordinateur personnel

(30) Priorität: 27.08.1993 DE 9312887 U
(43) Veröffentlichungstag der Anmeldung: 01.03.1995
(73) Patentinhaber: Siemens Nixdorf Informationssysteme AG, 33106 Paderborn (DE)
(72) Erfinder: von Daack, Gerd, D-86343 Königsbrunn (DE); Weishaupt, Werner, Dipl.-Ing. (FH), D-86497 Horgau (DE); Köhler, Friedrich, Dipl.-Ing. (FH), D-86405 Meitingen (DE)
(74) Vertreter: Fuchs, Franz-Josef, Dr.-Ing.

(56) Entgegenhaltungen:
- EP-A- 0 503 575
- DE-U- 9 312 887
- IBM TECHNICAL DISCLOSURE BULLETIN, Bd.29, Nr.5, Oktober 1986, NEW YORK, US Seiten 1972 - 1974 'Vertical Stand Assembly for Electronic Enclosure'
- PATENT ABSTRACTS OF JAPAN vol. 16, no. 54 (C-0909) 12. Februar 1992 & JP-A-32 054 808 (MATSUSHITA SEIKO CO LTD.) 13. November 1991

## Beschreibung

Die Erfindung betrifft eine Haltevorrichtung für einen Desktop-Personalcomputer gemäß den Merkmalen des Oberbegriffs des Anspruchs 1.

Desktop-Personalcomputer werden üblicherweise horizontal, insbesondere auf der Tischplatte eines Arbeits- oder Schreibtisches aufgestellt. Damit derart aufgestellte Personalcomputer einerseits keine Kratzspuren auf dem Tisch verursachen, andererseits rutschfest positioniert werden können, sind an der Unterseite des Personalcomputers, vorzugsweise an den Eckbereichen der Bodenfläche, jeweils Standfüße vorgesehen, die üblicherweise aus flachen Gummischeiben bestehen und entweder angeklebt, angeschraubt oder mittels angeformter Rastelemente an der Bodenfläche befestigt werden können.

Aus Platzgründen besteht nun häufig der Wunsch, den Desktop-Personalcomputer nicht mehr auf der Tischplatte aufzustellen, sondern, wenn möglich, in hängender Position an einer Wand, beispielsweise an einer seitlichen Innen- oder Außenwand des Arbeitstisches anzubringen. Dies setzt jedoch entsprechende Haltevorrichtungen sowohl an der Montagewand als auch am Gehäuse des Personalcomputers zwingend voraus.

Der vorliegenden Erfindung liegt nun die Aufgabe zugrunde, eine Haltevorrichtung für hängend positionierte Desktop-Personalcomputer so zu gestalten, daß am Gehäuse des Personalcomputers keine konstruktiven Eingriffe erforderlich sind und die notwendigen Hängevorrichtungen in einfacher Weise angebracht werden können, so daß auch eine Nach- bzw. Umrüstung des Gerätes ohne große Schwierigkeiten durchführbar ist.

Die Lösung dieser Aufgabe ergibt sich erfindungsgemäß durch die kennzeichnenden Merkmale des Anspruchs 1. Die Erfindung nutzt dabei den Vorteil, daß für die Befestigung der Haltevorrichtung bereits vorhandene Rastbohrungen im PC-Gehäuse genutzt werden können. Vorteilhafte Weiterbildungen der Erfindung ergeben sich aus den Merkmalen der Unteransprüche.

Im folgenden wird ein Ausführungsbeispiel der Erfindung anhand der Zeichnung näher erläutert. Dabei zeigen
Figur 1 eine erfindungsgemäße Haltevorrichtung zur Befestigung an der Bodenfläche eines Desktop-Personalcomputergehäuses,
Figur 2,3,4 ein Stützelement gemäß der Erfindung in Form einer Haltewand mit abgeformtem Schutzwinkel, in Vorder-, Seiten- und Draufsicht,
Figur 5 eine vereinfachte Ausführungsform des Stützelements in Form einer Stützschiene.

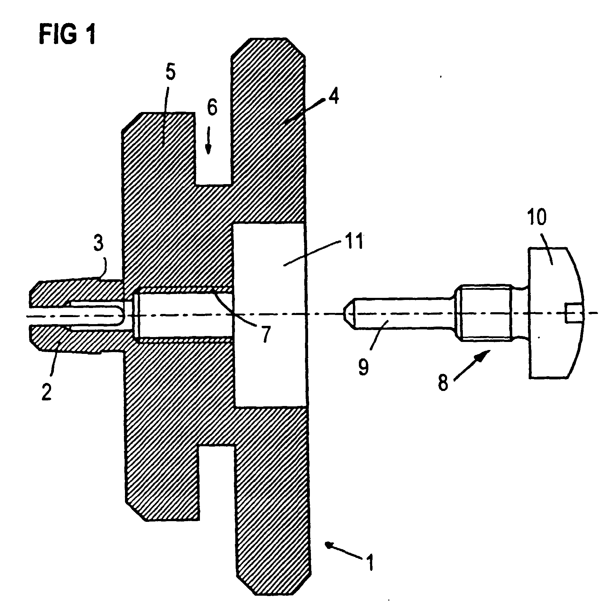

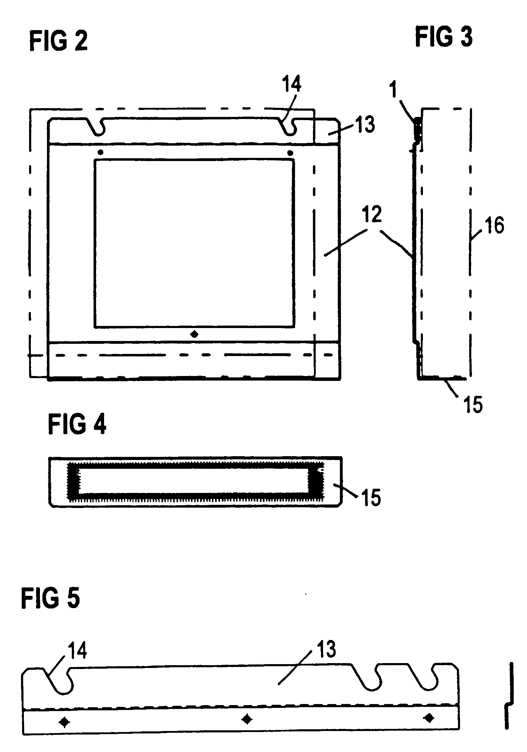

Die Figur 1 zeigt ein bolzenartiges Halteelement 1, das an einem Ende einen geschlitzten Zentrierdorn 2 aufweist, der in eine entsprechende Rastbohrung in der Bodenfläche eines Computergehäuses eintaucht. Der beim Eintauchen leicht zusammendrückbare Zentrierdorn 2 weist am Übergang zum bolzenartigen Grundkörper eine kleine Einschnürung auf, die der Wandstärke der Bodenfläche entspricht, so daß sich der nach dem Eintauchen wieder aufspreizende Zentrierdorn 2 mit einer ringförmigen Rastkante 3 an der Innenwandung der Bodenfläche abstützt. Am anderen Ende des bolzenartigen Halteelements 1 ist ein scheibenförmiger Ansatz 4 vorgesehen. Zusätzlich ist an dem der Bodenfläche des PC-Gehäuses zugewandten Bereich des bolzenartigen Halteelements 1 ein ringartiger Anschlagwulst 5 vorgesehen, wobei die zwischen Anschlagwulst 5 und Ansatz 4 verbleibende Ringnut 6 in ihrer Breite der Wandstärke eines dem Halteelement 1 zugeordneten schienenartigen Stützelements 13 (siehe Figur 5) angepaßt ist. Das bolzenartige Halteelement 1 weist ferner ein zentrales Schraubgewinde 7 auf, das in eine bis in den Zentrierdorn 2 hineinreichende Bohrung übergeht. Die zugehörige Schraube 8 weist demzufolge ein stiftförmiges Endstück 9 auf, das bei eingedrehter Schraube 8 bis in den geschlitzten Zentrierdorn 2 vordringt und auf diese Weise eine zusätzliche Aufspreizung bewirkt. Im zentralen Bereich des scheibenförmigen Ansatzes 4 ist eine den Abmessungen des Schraubkopfes 10 angepaßte Vertiefung 11 vorgesehen, so daß der Schraubkopf 10 in eingeschraubtem Zustand der Schraube 8 vollständig in das Halteelement 1 eintaucht. Wie bereits erwähnt, wird das in Figur 1 dargestellte Halteelement an der Bodenfläche eines PC-Gehäuses an Rastbohrungen befestigt, die an sich für Standfüße bestimmt sind. Wird der Personalcomputer nicht horizontal, sondern vertikal angeordnet, dann werden wenigstens die beiden oberen Standfüße durch Halteelement ersetzt, wobei die Dicke des ringartigen Anschlagwulstes 5 den Höhenabmessungen der Standfüße angepaßt ist.

Damit das mit Halteelementen versehene PC-Gehäuse 16 hängend befestigt werden kann, sind an der dafür vorgesehenen Montagewand entsprechende Einhängevorrichtungen anzubringen. Die in den Figuren 2,3 und 4 dargestellte Einhängevorrichtung ist Teil einer Haltewand 12. Sie besteht aus einem schienenartigen Stützelement 13 mit nach oben offenen U-förmigen Rastkerben 14. Diese Rastkerben 14 sind in ihrer Breite den Abmessungen des Halteelements 1 (siehe Figur 1) angepaßt, wobei das Halteelement 1 mit seiner Ringnut 6 in die Rastkerben eintaucht, während der scheibenförmige Ansatz 4 das Stützelement 13 hintergreift. Am unteren Ende der Haltewand 12 ist ein recktwinklig angesetzter Schutzwinkel 15 vorgesehen, der die nach unten gerichtete Gehäusewand mit den dort gegebenenfalls vorgesehenen Gehäuseöffnungen abschirmt. Um eine ausreichende Belüftung zu gewährleisten, weist der Schutzwinkel 15 zweckmäßig eine feinmaschige Lochstruktur auf.

Die Figur 5 zeigt eine vereinfachte Ausführungsform, bei der die Einhängevorrichtung nur aus dem schienenartigen Stützelement 13 besteht. Die U-förmigen Rastkerben zur Aufnahme der Halteelemente 1 (siehe Figur 1) sind wie bei der Ausführungsform gemäß Figur 2,3,4 schräg verlaufend angeordnet, damit das eingehängte Gerät bei leichtem Anheben nicht sofort aus der Verankerung herausfällt.

## Patentansprüche

1. Haltevorrichtung für einen Desktop-Personalcomputer mit quaderförmigem Gehäuse, dessen Bodenfläche an den jeweiligen Eckbereichen Rastbohrungen für daran zu befestigende Standfüße aufweist,
**dadurch gekennzeichnet**, daß die Haltevorrichtung mindestens zwei bolzenartigen Halteelemente (1) und ein an einer Wand horizontal angeordnetes, schienenartiges Stützelement (13) aufweist, daß je ein bolzenartiges Halteelement (1) versehen ist, um, zur hängenden Befestigung des sich mit seiner Bodenfläche an einer Wand abstützenden Personalcomputers wenigstens die in den oberen Ecken vorgesehenen Standfüße zu ersetzen und an einem Ende mit einem geschlitzten Zentrierdorn (2) in die Rastbohrungen der Bodenfläche einzutauchen, daß jedes Halteelement am anderen Ende einen scheibenartigen Ansatz (4) aufweist und daß das Stützelement (13) mit nach oben offenen U-förmigen Rastkerben (14) vorgesehen ist, in die das bolzenartige Halteelement (1) eintaucht, wobei der scheibenartige Ansatz (4) das in geringem Abstand zur Wand verlaufende Stützelement (13) hintergreift.

2. Haltevorrichtung nach Anspruch 1,
**dadurch gekennzeichnet**, daß das bolzenartige Halteelement (1) an dem der Bodenfläche des PC-Gehäuses zugewandten Bereich einen ringartigen Anschlagwulst (5) aufweist, wobei die zwischen Anschlagwulst (5) und scheibenförmigem Ansatz (4) verbleibende Ringnut (6) in ihrer Breite der Wandstärke des schienenartigen Stützelements (13) angepaßt ist.

3. Haltevorrichtung nach Anspruch 1 oder 2,
**dadurch gekennzeichnet**, daß das bolzenartige Halteelement (1) ein zentrales Schraubgewinde (7) aufweist und daß die in das Schraubgewinde (7) eindrehbare Schraube (8) ein stiftförmiges Endstück (9) aufweist, das bei eingedrehter Schraube (8) bis in den geschlitzten Zentrierdorn (2) des Halteelements (1) vordringt.

4. Haltevorrichtung nach Anspruch 3,
**dadurch gekennzeichnet**, daß der scheibenförmige Ansatz (4) des Halteelements (1) eine wenigstens den Abmessungen des Schraubkopfs (10) entsprechende Vertiefung (11) aufweist.

5. Haltevorrichtung nach einem der vorhergehenden Ansprüche,
**dadurch gekennzeichnet**, daß die U-förmigen Rastkerben (14) des Stützelements (13) schräg verlaufend angeordnet sind.

6. Haltevorrichtung nach einem der vorhergehenden Ansprüche,
**dadurch gekennzeichnet**, daß das Stützelement (13) Teil einer den Abmessungen der Bodenfläche des PC-Gehäuses angepaßten Haltewand (12) ist und daß die Haltewand (12) am unteren Ende einen rechtwinklig angesetzten Schutzwinkel (15) aufweist.

7. Haltevorrichtung nach Anspruch 6,
**dadurch gekennzeichnet**, daß der Schutzwinkel (15) der Haltewand (12) eine siebartige Lochstruktur aufweist.

## Claims

1. Supporting device for a desktop personal computer with a cuboid housing whose base surface has at the respective corner regions locating bores for mounting feet which are to be attached thereto, characterized in that the supporting device has at least two bolt-type retaining elements (1) and a rail-type support element (13) arranged horizontally on a wall, in that one bolt-type retaining element (1) each is provided at one end with a slotted centring mandrel (2) in order, for the purpose of pendulously attaching the personal computer supported with its base surface on a wall, to replace at least the mounting feet provided in the upper corners, and in order to enter the locating bores of the base surface, in that each retaining element has a disk-type attachment (4) at the other end, and in that the support element (13) is provided with U-shaped locating notches (14) which are open upwards and which the bolt-type retaining element (1) enters, the disk-type attachment (4) gripping behind the support element (13), which extends at a slight distance from the wall.

2. Supporting device according to Claim 1, characterized in that the bolt-type retaining element (1) has an annular stop collar (5) on the region facing the base surface of the PC housing, the width of the annular groove (6) remaining between the stop collar (5) and the disk-shaped attachment (4) being adapted to the wall thickness of the rail-type support element (13).

3. Supporting device according to Claim 1 or 2, characterized in that the bolt-type retaining element (1) has a central screw thread (7), and in that the screw (8) which can be screwed into the screw thread (7) has a pin-shaped end piece (9) which penetrates as far as into the slotted centring mandrel (2) of the retaining element (1) when the screw (8) is screwed in.

4. Supporting device according to Claim 3, characterized in that the disk-shaped attachment (4) of the retaining element (1) has a depression (11) corresponding to at least the dimensions of the screw head (10).

5. Supporting device according to one of the preceding claims, characterized in that the U-shaped locating notches (14) of the support element (13) are arranged extending obliquely.

6. Supporting device according to one of the preceding claims, characterized in that the support element (13) is part of a retaining wall (12) adapted to the dimensions of the base surface of the PC housing, and in that on the lower end the retaining wall (12) has a protective angle (15) attached in a right-angled fashion.

7. Supporting device according to Claim 6, characterized in that the protective angle (15) of the retaining wall (12) has a sieve-type perforated structure.

## Revendications

1. Dispositif de support pour un ordinateur personnel de bureau à châssis parallélépipédique, dont la surface de fond présente, dans les zones des coins correspondants, des trous d'encliquetage pour des pieds de soutien à y fixer,
caractérisé par le fait que le dispositif de support présente au moins deux éléments de support (1) du type boulon et un élément de soutien (13) du type rail disposé horizontalement contre une paroi, que chaque élément de support (1) en forme de boulon est pourvu, à une extrémité, d'un mandrin de centrage (2) fendu pour remplacer au moins les pieds de support prévus dans les coins supérieurs pour la fixation suspendue de l'ordinateur personnel à appuyer par sa surface de fond contre une paroi, le mandrin de centrage s'engageant dans les trous d'encliquetage de la surface au fond, que chaque élément de support présente, à l'autre extrémité, un épaulement (4) en forme de disque, et que l'élément de soutien (13) est pourvu de crans d'arrêt (14) en forme de U ouvert vers le haut, dans lesquels pénètre l'élément de support (1) du type boulon, tandis que l'épaulement (4) en forme de disque vient en prise, par-derrière, avec l'élément de soutien (13) qui s'étend à une faible distance de la paroi.

2. Dispositif de support selon la revendication 1,
caractérisé par le fait que l'élément de support (1) du type boulon présente, dans la zone dirigée vers la surface du fond du châssis de l'ordinateur personnel, un bourrelet de butée (5) de forme annulaire, tandis que la gorge annulaire (6), qui subsiste entre le bourrelet de butée (5) et l'épaulement (4) en forme de disque, a une largeur adaptée à l'épaisseur de paroi de l'élément de soutien (13) du type rail.

3. Dispositif de support selon la revendication 1 ou 2,
caractérisé par le fait que l'élément de support (1) du type boulon présente un taraudage (7) central, et que la vis (8) pouvant être serrée dans le filetage (7) présente une partie d'extrémité (9) en pointe qui, lorsque la vis (8) est serrée, pénètre jusque dans le mandrin de centrage (2) fendu de l'élément de support (1).

4. Dispositif de support selon la revendication 3,
caractérisé par le fait que l'épaulement (4) en forme de disque de l'élément de support (1) présente un renfoncement (11), qui correspond au moins aux dimensions de la tête de vis (10).

5. Dispositif de support selon l'une des revendications précédentes,
caractérisé par le fait que les crans d'arrêt (14) en forme de U de l'élément de soutien (13) sont disposés en biais.

6. Dispositif de support selon l'une des revendications précédentes,
caractérisé par le fait que l'élément de soutien (13) fait partie d'une paroi porteuse (12), adaptée aux dimensions de la surface du fond du châssis de l'ordinateur personnel, et que la paroi porteuse (12) présente, à l'extrémité inférieure, une équerre de sécurité (15) montée à angle droit.

7. Dispositif de support selon la revendication 6,
caractérisé par le fait que l'équerre de sécurité (15) de la paroi porteuse (12) présente une structure ciblée de trous.
